# EUROPÄISCHE PATENTSCHRIFT

(11) **EP 0 407 757 B1**
(45) Veröffentlichungstag und Bekanntmachung des Hinweises auf die Patenterteilung: **06.04.1994**
(21) Anmeldenummer: 90111282.1
(22) Anmeldetag: 15.06.1990
(51) Int. Cl.: A01D 78/10, A01B 73/04, A01D 75/20

(54) **Kreiselheumaschine**
Hay-making machine
Machine de fenaison

(30) Priorität: 08.07.1989 DE 3922543; 20.11.1989 DE 3938491
(43) Veröffentlichungstag der Anmeldung: 16.01.1991
(73) Patentinhaber: CLAAS SAULGAU GMBH, D-88340 Saulgau (DE)
(72) Erfinder: Deni, Franz, D-7968 Saulgau-Bogenweiler (DE); Geng, Manfred, D-7968 Saulgau-Bogenweiler (DE)

(56) Entgegenhaltungen:
- EP-A- 0 296 666
- EP-A- 0 300 937
- EP-A- 0 310 532
- DE-U- 8 807 510

## Beschreibung

Die Erfindung bezieht sich auf eine Kreiselheumaschine nach dem Oberbegriff des Anspruches 1.

Maschinen dieser Art sind z. B. durch die EP-A 0 296 666 bekannt geworden.

Beim Vorschlag nach dieser Schrift ist für die Schwenksteuerung der Innen- und Außenarme eine Hydraulikventil-Anlage vorgeschlagen, die am Arbeitsgerät montiert ist und vom Schleppersitz aus über beispielsweise Seile mechanisch betätigt werden soll. Die Verwendung einer Hydraulikventil-Anlage ist aber teuer und deren Betätigung vom Schleppersitz aus über mechanische Koppelungselemente umständlich und aufwendig.

Aufgabe der Erfindung ist es nun, eine gattungsgemäße Maschine so zu verbessern daß für die Schwenksteuerung der Innen- und Außenarme eine zusätzliche hydraulische Steueranlage entfallen und die Betätigung vom Schleppersitz aus ohne zusätzliche zum Arbeitsgerät geführte Koppelungselemente einfach von der am Schlepper regelmäßig vorhandenen Hydraulikbetätigung erhalten werden kann.

Diese Aufgabe wird dadurch gelöst, daß die Schwenksteuerung selbstätig durch die unterschiedlichen Schwenkwinkel der Außenarme gegenüber ihren Innenarmen sowie durch hydraulische Hubzylinder erfolgt, die am Maschinenrahmen und an den Außenarmen so angelenkt sind, daß der dem Außenarm mit kleinerem Schwenkwinkel zugeordnete Hubzylinder in Transportstellung der Maschine mit größerem Abstand von seinem Innenarm gelagert ist als der dem anderen Außenarm zugeordnete Hubzylinder von seinem Innenarm. Mit den Merkmalen der Unteransprüche ergeben sich weitere Vorteile, die in der Beschreibung näher erläutert werden.

Die Erfindung wird anhand von vier Abbildungen beispielsweise erläutert.

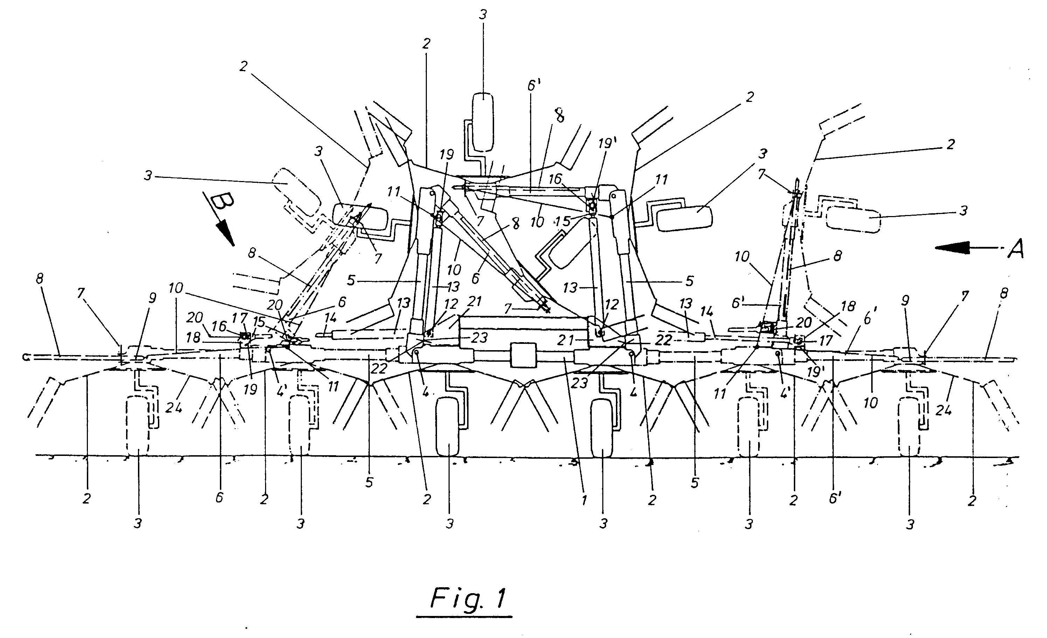

- Fig. 1: zeigt einen Kreiselheuer von hinten. Gestrichelt gezeichnet ist die Arbeitsstellung, strichpunktiert eine Stellung mit ausgehobenen Außenarmen, ausgezogen die Transportstellung.
- Fig. 2: zeigt den gleichen Gegenstand in Richtung des Pfeiles A. Ausgezogen ist der Schutzbügel in Transportstellung, gestrichelt wie er in Arbeitsstellung wäre.
- Fig. 3: zeigt schematisch einen Arbeitskreisel von oben mit einem Teil eines Außenarmes und einer Antriebs-Gelenkwelle.
- Fig. 4: zeigt in vergrößertem Maßstab einen Ausschnitt des Bereiches B (Pfeil B in Fig. 1).

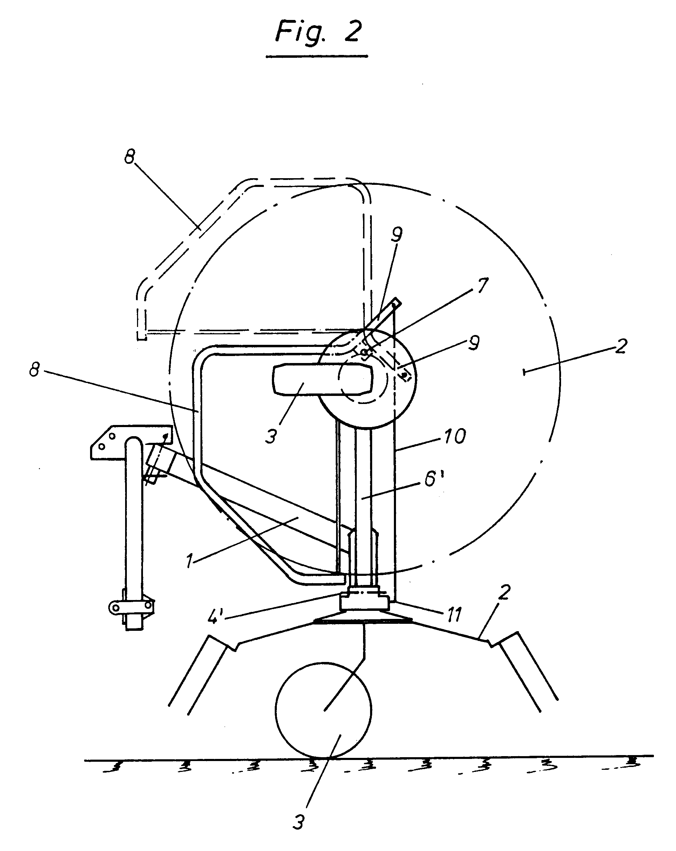

Ein Kreiselheuer hat einen Maschinenrahmen (1), der zwei Arbeitskreisel (2) aufnimmt und von zwei Laufrädern (3) abgestützt wird. An den Enden des Maschinenrahmens (1) sind mit Gelenkbolzen (4) je ein Innenarm (5) verschwenkbar angeschlossen. Die Innenarme (5) tragen je einen Arbeitskreisel (2) und ein Laufrad (3). Mit den freien Enden der Innenarme (5) sind über weitere Gelenkbolzen (4') je ein Außenarm (6) bzw. (6') verschwenkbar verbunden. Sie tragen ebenfalls je einen Arbeitskreisel (2) und ein Laufrad (3). Mittels eines senkrechten Zapfens (7) sind an den Außenarmen (6, 6') Schutzbügel (8) verschwenkbar angeschlossen. Mittels eines Hebels (9) und einer Stange (10), die beim Punkt (11) gelenkig mit den Innenarmen (5) verbunden ist, wird der Schutzbügel (8) in Abhängigkeit von der Stellung eines Innenarmes (5) zu einem zugehörigen Außenarm (6, 6') verschwenkt. In der Transportstellung nimmt der Schutzbügel (8) die gestrichelt gezeichnete Stellung ein. In einer teilweise ausgehobenen Stellung nimmt er die in Figur 2 ausgezogen gezeichnete Stellung ein.

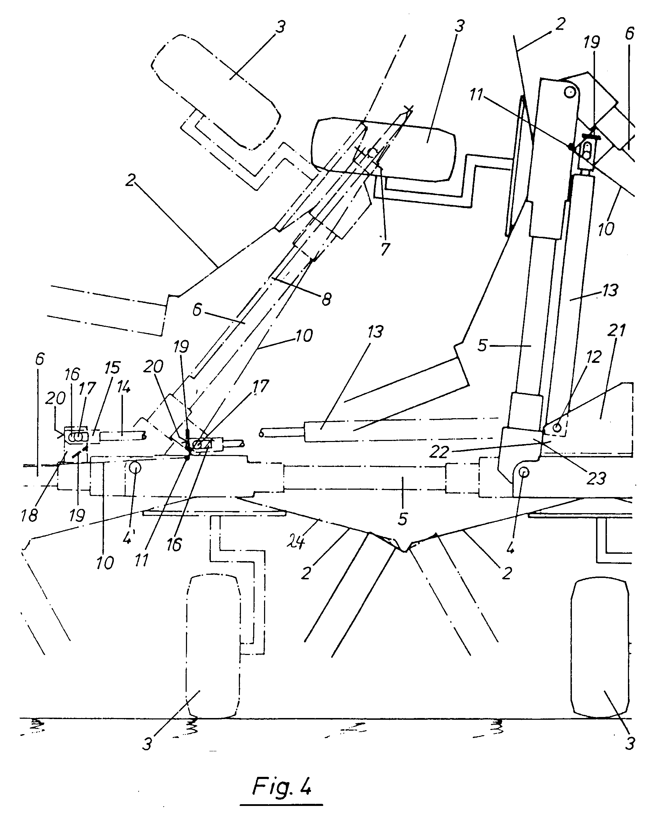

An Drehachsen (12), die in horizontaler Richtung mit unterschiedlichem Abstand von den Gelenkbolzen (4) für die Innenarme (5) liegen, sind hydraulische Hubzylinder (13) gelenkig mit dem Maschinenrahmen (1) verbunden. Ihre Kolbenstange (14) hat am Ende einen Kopf (15) mit einem Schlitz (16) (Fig. 4). Dieser Schlitz (16) wird von einem Bolzen (17) durchsetzt, der seinerseits in einer Lasche (18) fest ist, die von den Außenarmen (6, 6') absteht. Mit der Lasche (18) fest verbunden ist ein Anschlag (19, 19'), der mit einer Stirnfläche (20) des Kopfes (15) Zusammenwirken kann. An einem fest mit dem Maschinenrahmen (1) verbundenen Bauteil (21) sind Anschlagflächen (22), die mit entsprechenden Flächen (23) an den Innenarmen (5) zusammenwirken. Während die Anschlagflächen (22) und die Flächen (23) bei beiden Innenarmen (5) gleich angeordnet sind, sind die Anschläge (19, 19') an den Außenarmen (6, 6') in unterschiedlicher Stellung angebracht, und zwar derart, daß der Außenarm (6) zu dem Innenarm (5) in der Transportstellung einen spitzeren Winkel bilden kann, als der Außenarm (6') zu seinem entsprechenden Innenarm (5).

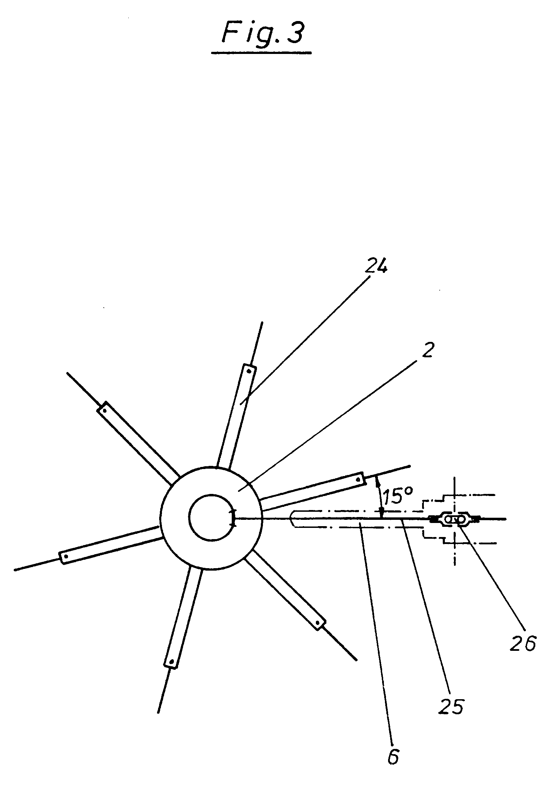

Die Außenkreisel (2) besitzen Zinkenarme (24). Die Arbeitskreisel (2) werden von einer Gelenkwelle (25) angetrieben, die die Außenarme (6, 6') durchsetzt (Fig. 3). Wegen der in der Transportstellung notwendigen starken Beugung der Antriebsgelenke müssen diese als Doppelgelenke (26) ausgeführt werden. Doppelgelenke haben in stark gebeugter Stellung nur vier mögliche Raststellungen im Abstand von je 90°. Wenn man davon ausgeht, daß ein Zinkenarm (24) in der Transportstellung nicht parallel zu dem Maschinenrahmen (1) stehen darf, weil sonst Kollisionen zwischen Arbeitskreiseln (2) und anderen Bauteilen möglich wären, ist erfindungsgemäß vorgesehen, daß bei Arbeitskreiseln mit 6 Zinkenarmen (24) bei mindestens einem äußeren Arbeitskreisel (2) ein Zinkenarm (24) einen Winkel von etwa 15° zu einem Außenarm (6, 6') einnimmt und daß die Übersetzung zwischen einem Arbeitskreisel (2) und der Gelenkwelle (25) einen Wert von 1:1,5 oder 1:3 hat. Wenn, wie im Beispiel gezeigt, die Arbeitskreisel (2) sechs Zinkenarme (24) haben und die Übersetzung zwischen Zinkenkreisel (2) und Gelenkwelle (25) 1:3 ist, möge einer der Zinkenarme einen Winkel von 15° zu dem Außenarm (6) einnehmen. Bei der nächsten möglichen Raststellung des Doppelgelenkes (26) von + 90° verdreht sich der Zinkenkreisel (2) um + 30°. Damit bildet dann der nächste Zinkenarm (24) einen Winkel von 15° mit dem Außenarm (6). Es tritt also keine Stellung ein, bei der ein Zinkenarm (24) parallel zu einem Außenarm (6, 6') steht. Die gleiche Wirkung kann erzielt werden, wenn bei anderen Anzahlen der Zinkenarme (24) die Übersetzung so gewählt wird, daß bei einer Vierteldrehung der Gelenkwelle (25) der Arbeitskreisel (2) um eine halbe oder eine ganze Teilung verdreht wird.

In der Arbeitsstellung stehen die Innenarme (5) und die Außenarme (6, 6') etwa waagrecht. Wenn die Hubzylinder (13) zur Erreichung der Transportstellung zusammengefahren werden, werden zunächst die beiden Außenarme (6, 6') so weit angehoben, bis die Anschläge (19, 19') an den Stirnflächen (20) des Kopfes (15) anliegen. Der Außenarm (6) ist dabei weiter nach innen geneigt, als der Außenarm (6'). In dieser Stellung entsteht an dem Außenarm (6) eine günstigere Schwerpunktlage für die Aushubbewegung, als auf der anderen Seite. Deshalb setzt sich die Hubbewegung zunächst nur auf der Seite mit dem Außenarm (6) fort, bis dieser samt dem zugehörigen Innenarm (5) ihre durch die Anschläge (22, 23) bestimmte Endlage für die Transportstellung erreicht haben. Dann geht die Aushubbewegung auf der Seite mit dem Außenarm (6') weiter, bis auch dieser mit dem zugehörigen Innenarm (5) ihre durch die Anschläge (22, 23) bestimmte Transportstellung erreicht haben.

Beim Ablassen von der Transportstellung in die Arbeitsstellung ist der Bewegungsablauf in der umgekehrten Reihenfolge. Weil der Hubzylinder (13) für den Außenarm (6') mit seiner Drehachse (12) am Maschinenrahmen (1) einen größeren horizontalen Abstand vom Gelenkbolzen (4) für den Innenarm (5) hat, als der Hubzylinder (13) für den anderen Außenarm (6), beginnt wegen des größeren Drehmomentes die Schwenkbewegung zuerst am Innenarm (5) für den Außenarm (6').

## Patentansprüche

1. Kreiselheumaschine mit Sechs Arbeitskreiseln (2), von denen Zwei an einem mittig angeordneten Maschinenrahmen (1) und je einer an, um in Fahrtrichtung liegende Achsen (4) am Maschinenrahmen (1) hydraulisch schwenkbaren Innenarmen (5) und an diesen um in Fahrtrichtung liegende Achsen (4') hydraulisch schwenkbaren Außenarmen (6, 6'), die mit schwenkbaren Schutzbügeln (8) ausgestaltet sind, gelagert ist, wobei die Innen- und Außenarme (5, 6, 6') in der Arbeitsstellung etwa waagrecht liegen und in der Transportstellung die Innenarme (5) nach oben und die Außenarme (6, 6') zur Maschinenmitte hin mit unterschiedlichem Schwenkwinkel gegenüber ihren Innenarmen (5) so verschwenkt sind, daß ein Außenarm (6) schräg nach unten gerichtet ist und der andere Außenarm (6') etwa waagrecht über dem schräg nach unten gerichteten Außenarm (6) liegt, wobei die Innen- und Außenarme (5, 6, 6') so schwenkend gesteuert sind, daß für eine Transportstellung der Innenarm (5) mit dem eine größere Schwenkbewegung ausführenden Außenarm (6) vor dem anderen Innenarm (5) und dem an diesem angelenkten Außenarm (6') nach oben und für eine Arbeitsstellung in umgekehrter Reihenfolge nach unten bewegt werden, dadurch gekennzeichnet, daß die Schwenksteuerung selbstätig durch die unterschiedlichen Schwenkwinkel der Außenarme (6, 6') gegenüber ihren Innenarmen (5) sowie durch hydraulische Hubzylinder (13) erfolgt, die am Maschinenrahmen (1) und an den Außenarmen (6, 6') so angelenkt sind, daß der dem Außenarm (6') mit kleinerem Schwenkwinkel zugeordnete Hubzylinder (13) in Transportstellung der Maschine mit größerem Abstand von seinem Innenarm (5) gelagert ist als der dem anderen Außenarm (6) zugeordnete Hubzylinder (13) von seinem Innenarm (5).

2. Kreiselheumaschine nach Anspruch 1, dadurch gekennzeichnet, daß der Innenarm (5) mit dem eine größere Schwenkbewegung ausführenden Außenarm (6) so schwenkend gesteuert ist, daß seine Schwenkbewegung nach oben vor derjenigen des anderen Innenarmes (5) eingeleitet und beendet und seine Schwenkbewegung nach unten nach der des anderen Innenarmes (5) eingeleitet und beendet wird.

3. Kreiselheumaschine nach den Ansprüchen 1 und 2, dadurch gekennzeichnet, daß zwischen dem Maschinenrahmen (1) und den Außenarmen (6, 6') auf jeder Seite ein doppelt wirkender hydraulischer Hubzylinder (13) eingeschaltet ist, der eine Freilaufeinrichtung (16, 17) besitzt, die in der Arbeitsstellung eine begrenzte Beweglichkeit der Außenarme (6, 6') nach oben und unten zuläßt.

4. Kreiselheumaschine nach Anspruch 3, dadurch gekennzeichnet, daß die Freilaufeinrichtung durch eine Schlitzführung (16, 17) gebildet wird.

5. Kreiselheumaschine nach Anspruch 3, dadurch gekennzeichnet, daß die Freilaufeinrichtung durch hydraulische Verstellglieder gebildet wird.

6. Kreiselheumaschine nach mindestens einem der Ansprüche 1 bis 5, dadurch gekennzeichnet, daß die Zinkenstangen (24) mindestens eines äußeren Arbeitskreisels (2) in der Transportstellung zwangsweise so stehen, daß zwei benachbarte Zinkenstangen (24) unsymmetrisch zu einem Außenarm (6, 6') stehen.

7. Kreiselheumaschine nach Anspruch 6, dadurch gekennzeichnet, daß in der Transportstellung eine Zinkenstange (24) mit einem Außenarm (6) einen Winkel von etwa 15° bildet.

8. Kreiselheumaschine nach den Ansprüchen 6 und 7, dadurch gekennzeichnet, daß der Arbeitskreisel (2) sechs Zinkenarme (24) besitzt und daß er zu der antreibenden Gelenkwelle (25) im Verhältnis 1 : 1,5 oder 1 : 3 übersetzt ist.

9. Kreiselheumaschine nach mindestens einem der Ansprüche 1 - 8, dadurch gekennzeichnet, daß mit den Außenarmen (6, 6') schwenkbar verbundene Schutzbügel (8) derart kinematisch gesteuert werden, daß sie aus einer in Arbeitsstellung von den Außenarmen (6, 6') nach außen abgewandten Stellung in der Transportstellung in eine in Fahrtrichtung gesehen etwa parallel zu den Außenarmen (6,6') und diese ganz oder teilweise überdeckende und in Fahrtrichtung vor oder hinter den Außenarmen (6,6') liegende Stellung verbracht werden.

## Claims

1. A rotary hay-making machine having six working rotors (2), of which two are mounted on a centrally arranged machine frame (1) and a respective one on inner arms (5) hydraulically pivotable on the machine frame (1) about axes (4) disposed in the direction of travel and on outer arms (6, 6') which are hydraulically pivotable on said inner arms (5) about axes (4') disposed in the direction of travel, said outer arms being provided with pivotable guard hoops (8), wherein the inner and outer arms (5, 6, 6') lie approximately horizontally in the working position and in the transportation position the inner arms (5) are pivoted upwardly and the outer arms (6, 6') are pivoted towards the middle of the machine with different angles of pivotal movement relative to their inner arms (5) in such a way that one outer arm (6) is directed inclinedly downwardly and the other outer arm (6') is disposed approximately horizontally above the inclinedly downwardly directed outer arm (6), wherein the inner and outer arms (5, 6, 6') are pivotingly controlled in such a way that for a transportation position the inner arm (5) with the outer arm (6) that performs a greater pivotal movement is moved upwardly before the other inner arm (5) and the outer arm (6') pivotally mounted thereto and for a working position is moved downwardly in the reverse sequence, characterised in that the pivotal control is effected automatically by the different pivotal angles of the outer arms (6, 6') relative to their inner arms (5) and by hydraulic lift cylinders (13) which are so mounted to the machine frame (1) and to the outer arms (6, 6') that the lift cylinder (13) associated with the outer arm (6') with the smaller pivotal angle is mounted in the transportation position of the machine at a greater spacing from its inner arm (5) than the lift cylinder (13) associated with the other outer arm (6) from its inner arm (5).

2. A rotary hay-making machine according to claim 1 characterised in that the inner arm (5) with the outer arm (6) that performs a greater pivotal movement is pivotingly controlled in such a way that its pivotal movement upwardly is initiated and terminated prior to that of the other inner arm (5) and its pivotal movement downwardly is initiated and terminated after that of the other inner arm (5).

3. A rotary hay-making machine according to claims 1 and 2 characterised in that a double-acting hydraulic lift cylinder (13) is connected between the machine frame (1) and the outer arms (6, 6') on each side, the lift cylinder having a free-motion means (16, 17) which in the working position permits limited mobility of the outer arms (6, 6') upwardly and downwardly.

4. A rotary hay-making machine according to claim 3 characterised in that the free-motion means is formed by a slot guide bans (16, 17).

5. A rotary hay-making machine according to claim 3 characterised in that the free-motion means is formed by hydraulic displacement members.

6. A rotary hay-making machine according to at least one of claims 1 to 5 characterised in that the tine bars (24) of at least one outer working rotor (2) are compelled to be so disposed in the transportation position that two adjacent tine bars (24) are disposed asymmetrically relative to an outer arm (6, 6').

7. A rotary hay-making machine according to claim 6 characterised in that in the transportation position a tine bar (24) forms an angle of about 15° with an outer arm (6).

8. A rotary hay-making machine according to claims 6 and 7 characterised in that the working rotor (2) has six tine arms (24) and that it is stepped up relative to the universally jointed drive shaft (25) in a ratio of 1:1.5 or 1:3.

9. A rotary hay-making machine according to at least one of claims 1 to 8 characterised in that guard hoops (8) pivotably connected to the outer arms (6, 6') are kinematically controlled in such a way that they are moved from a position in which in the working position they are directed outwardly away from the outer arms (6, 6'), in the transportation position, into a position in which, as viewed in the direction of travel, they are approximately parallel to the outer arms (6, 6') and entirely or partially cover over same and are disposed in front of or behind the outer arms (6, 6') in the direction of travel.

## Revendications

1. Machine de fenaison à six rotors de travail (2), dont deux sont montés sur un châssis de machine (1) disposé centralement, deux autres sont montés respectivement sur des bras internes (5) pouvant être pivotés hydrauliquement sur le châssis de machine (1) autour d'axes (4) orientés dans la direction de la marche, et deux sur des bras externes (6, 6') pouvant être pivotés hydrauliquement sur ces derniers autour d'axes (4') orientés dans la direction de la marche et équipés d'étriers de protection pivotants (8), les bras internes et externes (5, 6, 6') étant sensiblement horizontaux dans la position de travail, les bras internes (5) pouvant être pivotés vers le haut dans la position de transport et les bras externes (6, 6') pouvant être pivotés en direction du centre de la machine sur des angles de pivotement différents par rapport à leurs bras internes (5), de manière qu'un bras externe (6) soit orienté en oblique vers le bas et l'autre bras externe (6') soit disposé sensiblement horizontalement au-dessus du bras externe (6) orienté en oblique vers le bas, les bras internes et externes (5, 6, 6') étant pivotés de manière que pour une position de transport le bras interne (5) soit déplacé vers le haut avec le bras externe (6) et effectue un mouvement pivotant plus important avant l'autre bras interne (5) et le bras externe (6') articulé à ce dernier, et soient déplacés vers le bas selon une succession inversée pour parvenir à la position de travail, caractérisée en ce que la commande de pivotement a lieu automatiquement du fait que l'angle de pivotement des bras externes (6, 6') par rapport à leurs bras internes (5) est différent, ainsi que par des vérins hydrauliques (13) qui sont articulés au châssis de machine (1) et aux bras externe (6, 6') de manière que le vérin (13) associé au bras externe (6') dont l'angle de pivotement est plus petit soit monté dans la position de transport de la machine à une plus grande distance de son bras interne (5) que le vérin (13) associé à l'autre bras externe (6) de son bras interne (5).

2. Machine de fenaison selon la revendication 1, caractérisée en ce que le bras interne (5) est pivoté avec le bras externe (6) qui effectue un mouvement pivotant plus important de manière que son mouvement de pivotement vers le haut commence et se termine avant celui de l'autre bras interne (5) et que son mouvement de pivotement vers le bas commence et se termine après celui de l'autre bras interne (5).

3. Machine de fenaison selon les revendications 1 et 2, caractérisée en ce qu'un vérin hydraulique à double effet (13) est monté de chaque côté entre le châssis de machine (1) et les bras externes (6, 6'), qui comprend un dispositif à déplacement libre (16, 17) qui autorise une mobilité limitée vers le haut et vers le bas des bras externes (6, 6') dans la position de travail.

4. Machine de fenaison selon la revendication 3, caractérisée en ce que le dispositif à déplacement libre est constitué par un dispositif de guidage à fente (16, 17).

5. Machine de fenaison selon la revendication 3, caractérisée en ce que le dispositif à déplacement libre est constitué par un organe de réglage hydraulique.

6. Machine de fenaison selon l'une au moins des revendications 1 à 5, caractérisée en ce que les tiges munies de dents (24) d'au moins un rotor de travail externe (2) sont disposées obligatoirement dans la position de transport de manière que deux tiges à dents voisines (24) soient disposées de façon asymétrique par rapport à un bras externe (6, 6').

7. Machine de fenaison selon la revendication 6, caractérisé en ce que dans la position de transport, une tige à dents (24) forme un angle d'environ 15° avec un bras externe (6).

8. Machine de fenaison selon les revendications 6 et 7, caractérisée en ce que le rotor de travail (2) comprend six bras à dents (24) et en ce qu'il est démultiplié par rapport à l'arbre articulé d'entraînement (25) selon un rapport de 1:1,5 ou 1:3.

9. Machine de fenaison selon l'une au moins des revendications 1 à 8, caractérisée en ce que des étriers de protection (8) reliés de façon pivotante aux bras externes (6, 6') sont commandés cinématiquement de manière que partant d'une position écartée vers l'extérieur des bras externes (6, 6') dans la position de travail, ils soient amenés à la position de transport en étant, vus dans la direction de la marche, sensiblement parallèles aux bras externes (6, 6') et en recouvrant ces derniers en totalité ou partiellement, dans une position située à l'avant ou à l'arrière des bras externes (6, 6') dans la direction de la marche.
